(19) Europäisches Patentamt
European Patent Office
Office européen des brevets

(11) **EP 4 679 936 A1**

(12) **EUROPEAN PATENT APPLICATION**
published in accordance with Art. 153(4) EPC

(43) Date of publication:
**14.01.2026  Bulletin 2026/03**

(21) Application number: **24792386.5**

(22) Date of filing: **11.03.2024**

(51) International Patent Classification (IPC):
*H05B 3/20* (2006.01)   *B29C 45/14* (2006.01)
*H05B 3/10* (2006.01)   *H05B 3/36* (2006.01)

(52) Cooperative Patent Classification (CPC):
**H05B 3/286; B29C 45/14; H05B 3/10; H05B 3/20;
H05B 3/36;** H05B 2203/003; H05B 2203/014;
H05B 2203/017

(86) International application number:
**PCT/JP2024/009317**

(87) International publication number:
**WO 2024/219110 (24.10.2024 Gazette 2024/43)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.04.2023  JP 2023067449**

(71) Applicant: **NISSHA CO., LTD.**
**Kyoto-shi, Kyoto 604-8551 (JP)**

(72) Inventors:
• **HASHIMOTO, Takumi**
  **Kyoto-shi, Kyoto 604-8551 (JP)**
• **KOIZUMI, Tomoaki**
  **Kyoto-shi, Kyoto 604-8551 (JP)**
• **YOKOYAMA, Takashi**
  **Kyoto-shi, Kyoto 604-8551 (JP)**

(74) Representative: **Isarpatent**
**Patent- und Rechtsanwälte Partg mbB**
**Friedrichstraße 31**
**80801 München (DE)**

(54) **ELECTRICALLY CONDUCTIVE SHEET, RESIN MOLDED ARTICLE, AND MANUFACTURING METHOD FOR SAME**

(57)     [Problem] To provide a conductive sheet, a resin molded article, and a method for manufacturing the resin molded article that prevent peeling and disconnection of a wire caused by forming the conductive sheet into a three-dimensional shape.

[Solution] A film heater 10, which is a conductive sheet, includes a base sheet 11 having a rectangular shape in plan view, a conductive pattern 13 formed with a conductive wire 12 fixed onto the base sheet 11, and a protective sheet 21 formed on the base sheet 11 so as to cover the conductive pattern 13. The film heater 10 is incorporated in, for example, an emblem or a bumper of an automobile and used for melting snow. At an end portion of the base sheet 11, there is a bent region A extending in a band shape in a lateral direction of the base sheet 11. The conductive pattern 13 is a meander-shaped pattern formed by repeating U-turns aligned at a constant width to the left and right in the lateral direction of the base sheet 11 so as to be equally spaced in a longitudinal direction. This pattern constitutes a heater portion 14.

*FIG. 1*

**Description**

Technical Field

There is a film heater which is a conductive sheet in which a conductive pattern formed with a conductive wire is formed on one surface of a base sheet. The conductive wire is embedded in a surface of the base sheet over the entire length through ultrasonic welding (see, for example, Patent Literature 1).

Background Art

In related art, a conductive sheet having a conductive pattern on a base sheet has been proposed.
Patent Literature 1: JP 2019-169417 A

Disclosure of Invention

Technical Problem

In a case where the conductive sheet in the related art as described above is formed into a three-dimensional shape, stretching of a film is different from stretching of a wire, and thus, the wire may be peeled off from the base sheet at a bent portion, or the wire may be disconnected.
The present invention has been made to solve the problem as described above, and an object of the present invention is to provide a conductive sheet, a resin molded article, and a method for manufacturing the resin molded article that prevent peeling and disconnection of a wire caused by forming the conductive sheet into a three-dimensional shape.

Solution to Problem

In order to achieve the above object, a first invention is a conductive sheet including a base sheet having a bent region, a conductive pattern formed with a conductive wire fixed onto the base sheet, and a protective sheet formed on the base sheet so as to cover the conductive pattern, in which a part of the wire crosses the bent region, and a linear expansion of either the base sheet or the protective sheet, which is to be the outer sheet, is set to be larger than a linear expansion of the other of the base sheet or the protective sheet, which is to be the inner sheet, when the conductive sheet is bent in the bent region.
With this configuration, a difference in expansion and contraction between the outer sheet and the inner sheet when the conductive sheet is bent is absorbed, so that the protective sheet is fixed to the base sheet even when the conductive sheet is bent, and peeling of the wire can be suppressed.
A second invention is a conductive sheet in which a length of an outer surface of the inner sheet is set to be equal to a length of an inner surface of the outer sheet when the conductive sheet is bent in the bent region.
With this configuration, stress due to a difference in expansion is less likely to be applied to a contact surface between the protective sheet and the base sheet, so that peeling of the wire can be stably prevented.
A third invention is a conductive sheet in the configuration of the first invention, in which when a linear expansion of the base sheet is set as A1, a linear expansion of the protective sheet is set as A2, a thickness of the conductive sheet is set as d, a bent portion of the base sheet when the conductive sheet is bent in the bent region is regarded as an arc, a radius thereof is set as R, a molding temperature when the conductive sheet is bent in the bent region is set as T1, and a room temperature at that time is set as T2, a relationship of formula (1) or (2) below is set.

(1) In a case where A1 < A2,

[Math. 1]

$$A2 - A1 > \frac{d}{R \times (T1 - T2)}$$

(2) In a case where A1 > A2,

[Math. 2]

$$A1 - A2 > \frac{d}{R \times (T1 - T2)}$$

With this configuration, in a case where there is a difference in expansion between the base sheet and the protective sheet when the conductive sheet is bent, the conductive sheet is warped toward the sheet having a small linear expansion, so that it is possible to assist molding of the conductive sheet into a three-dimensional shape by utilizing the warpage.

A fourth invention is a conductive sheet in the configuration of the first invention, in which the conductive pattern includes one continuous wire, and includes a heater portion and a connection terminal portion.

With this configuration, the wire is protected by the protective sheet and is in close contact with the base sheet, and thus, the wire is not peeled off even when the conductive sheet is bent.

A fifth invention is a resin molded article including a preform body obtained by bending the conductive sheet of the first invention in a bent region, and a resin molded body stacked on a front surface, a back surface, or both surfaces of the preform body.

With this configuration, the preform body in which the wire is not peeled off is stacked on the resin molded body, so that the resin molded article in which the wire is not peeled off is obtained.

A sixth invention is a method for manufacturing a resin molded article, the method including the steps of: disposing the conductive sheet according to claim 1 on any cavity surface of an injection molding mold including a fixed mold and a movable mold that forms a cavity between the movable mold and the fixed mold by clamping; clamping the injection molding mold; injecting a molten resin into the cavity to mold a resin molded body and simultaneously fixing the conductive sheet to a surface of the resin molded body; and opening the injection molding mold to take out the resin molded body.

With this configuration, the wire is protected by the protective sheet even when the conductive sheet is bent by injection molding, and adheres to the base sheet, so that a resin molded article in which the wire is not peeled off can be injection-molded.

A seventh invention is the method for manufacturing the resin molded article of the sixth invention, in which the conductive sheet is a preform body obtained by bending the conductive sheet of the first invention in a bent region.

With this configuration, the preform body in which the wire is not peeled off is inserted into the injection molding mold, so that a resin molded article in which the wire is not peeled off can be obtained.

An eighth invention is a method for manufacturing a resin molded article, the method including the steps of: preparing the preform body obtained by bending the conductive sheet of the first invention in a bent region; and fixing a resin molded body having a surface shape corresponding to a shape of a front surface, a back surface, or both surfaces to the front surface, the back surface, or both surfaces of the preform body.

With this configuration, the preform body in which the wire is not disconnected is stacked on the resin molded body, so that a resin molded article in which the wire is not disconnected can be obtained.

Advantageous Effects of Invention

According to the present invention, when a conductive sheet is formed into a three-dimensional shape, it is possible to prevent a conductive wire fixed to the conductive sheet from being peeled or disconnected.

Brief Description of Drawings

Fig. 1 is a schematic plan view illustrating a film heater according to a first embodiment and a second embodiment of the present invention.

Fig. 2 is a schematic cross-sectional view taken along a line II-II illustrated in Fig. 1.

Fig. 3(1) is a schematic cross-sectional view taken along the line II-II when the film heater illustrated in Fig. 1 according to the first embodiment of the present invention is bent in a bent region, and Fig. 3(2) is a schematic cross-sectional view taken along the line II-II when the film heater illustrated in Fig. 1 according to the second embodiment of the present invention is bent in the bent region.

Fig. 4 is a view illustrating a step of manufacturing a film heater molded article.

Fig. 5 is a view illustrating another step of manufacturing the film heater molded article.

Description of Embodiments

Next, embodiments of the present invention will be described with reference to the drawings.

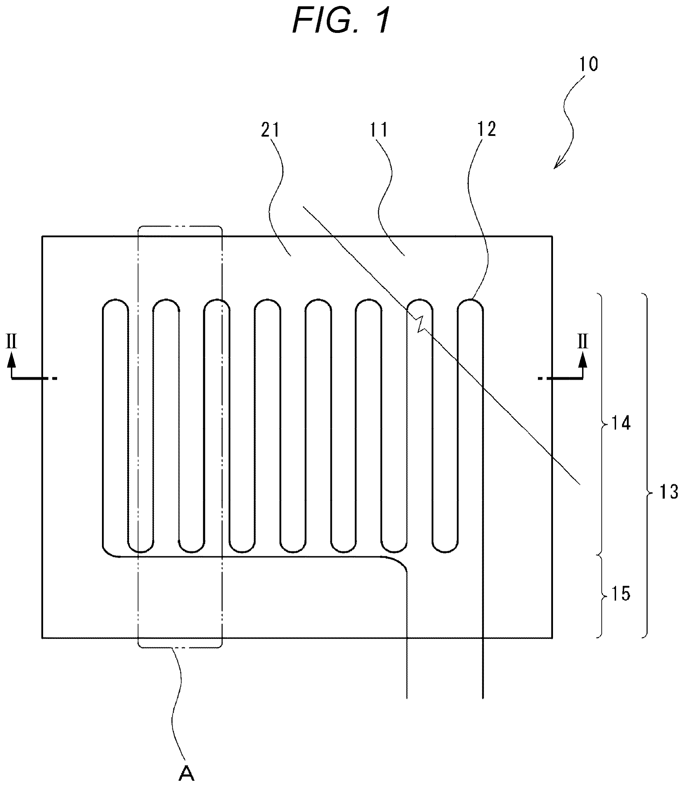

Referring to Fig. 1, a film heater 10 which is a conductive sheet according to a first embodiment of the present invention includes a base sheet 11 having a rectangular shape in plan view, a conductive pattern 13 formed with a conductive wire 12 fixed onto the base sheet 11, and a protective sheet 21 formed on the base sheet 11 so as to cover the conductive pattern 13. The film heater 10 is incorporated in, for example, an emblem or a bumper of an automobile and used for melting snow. At an end portion of the base sheet 11, there is a bent region A extending in a band shape in a lateral direction of the base sheet 11. The conductive pattern 13 is a meander-shaped pattern formed by repeating U-turns aligned at a constant width to the left and right in the lateral direction of the base sheet 11 so as to be equally spaced in a longitudinal direction. This pattern constitutes a heater portion 14. A part of the wire 12 crosses the bent region A, both ends of the wire 12 merge at one point of the pattern, and the two wires are parallel at a constant interval and extend outward from an outer edge of a corner portion of the base sheet 11. This portion constitutes a connection terminal portion 15. A decorative layer, a transfer layer, an adhesive layer, and other functional layers may be stacked on a front surface and a back surface of the film heater 10 according to a product to which the film heater 10 is to be applied. The base sheet 11 has a rectangular shape, but may have another shape such as an irregular shape corresponding to the shape of the final product.

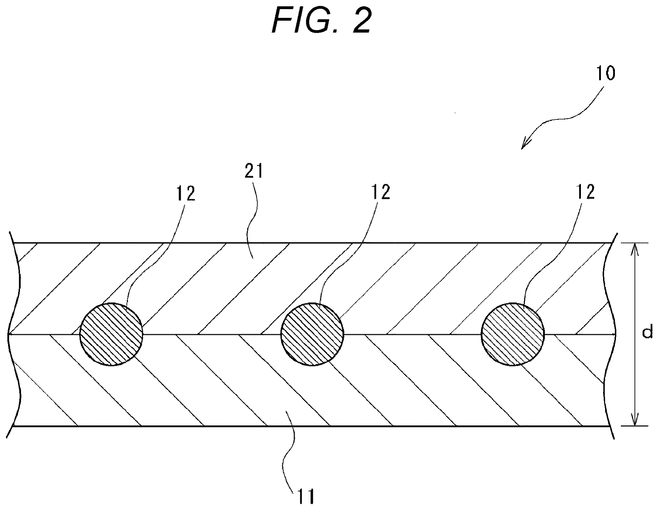

Referring to Fig. 2, the wire 12 is fixed onto the base sheet 11 such that a part of the cross section thereof is embedded in the base sheet 11. A protective sheet 21 is overlapped on the base sheet 11 so as to cover the wire 12. The wire 12 is sandwiched between the base sheet 11 and the protective sheet 21. As a method for embedding the wire 12 in the base sheet 11, for example, a method in which the wire 12 is embedded on the base sheet 11 by utilizing the principle of ultrasonic welding is desirable. When ultrasonic welding is performed, it is possible to use a wiring drawing apparatus capable of melting the surface of the base sheet 11 made of a thermoplastic resin while feeding out the wire 12 and embedding the wire 12 on the base sheet 11. By embedding the wire 12 on the base sheet 11, the conductive pattern 13 is positioned on the base sheet 11.

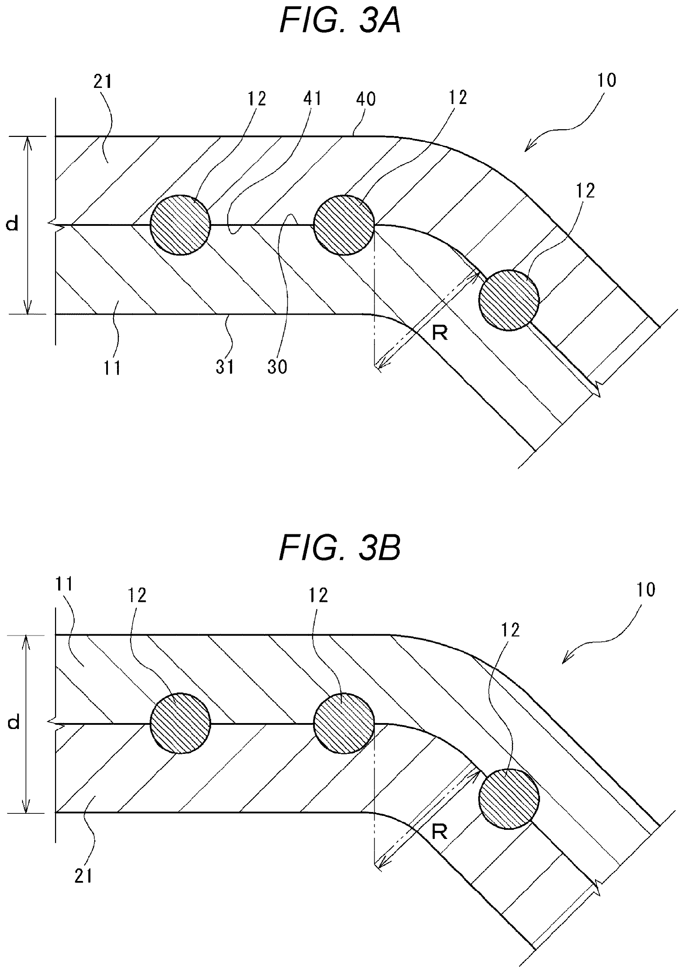

Fig. 3(1) is a schematic cross-sectional view taken along the line II-II in a state where the film heater 10 according to the first embodiment of the present invention is bent downward in the bent region A with the protective sheet 21 as an upper surface. The base sheet 11 is stretched by bending, and a length of an outer surface 30 of the base sheet 11 after bending is longer than a length of the outer surface 30 of the base sheet 11 before bending.

The film heater 10 can be configured such that when the film heater 10 according to the first embodiment of the present invention is bent by applying heat in the bent region A, the length of the outer surface 30 of the base sheet 11 to be the inner sheet becomes equal to the length of the inner surface 41 of the protective sheet 21 to be the outer sheet. Specifically, the film heater 10 expands due to thermal expansion from the room temperature to the glass transition point, and the lengths become equal using a difference in expansion. Furthermore, when a temperature exceeding the glass transition point is applied, molecular arrangement is changed, and the shape is retained in its shape.

With this configuration, stress due to the difference in expansion is less likely to be applied to a contact surface between the protective sheet 21 and the base sheet 11, so that peeling of the wire 12 can be stably prevented.

When a linear expansion of the base sheet 11 according to the first embodiment of the present invention is set as A1, a linear expansion of the protective sheet 21 is set as A2, a thickness of the film heater 10 is set as d, a bent portion of the base sheet 11 when the film heater 10 is bent is regarded as an arc, a radius thereof is set as R (see Fig. 3(1)), a molding temperature when the film heater 10 is bent in the bent region is set as T1, and a room temperature at that time is set as T2, a relationship of the following formula (1) can be set.

(1)

[Math. 1]

$$A2 - A1 > \frac{d}{R \times (T1 - T2)}$$

With this setting, when the film heater 10 is bent, the film heater 10 is warped toward the base sheet 11 having a small linear expansion due to the difference in expansion between the base sheet 11 and the protective sheet 21, so that it is possible to assist molding of the conductive sheet into a three-dimensional shape by utilizing the warpage.

As the base sheet 11, a thermoplastic resin sheet such as polycarbonate, acrylic resin, and ABS resin is used. For example, when a thermoplastic resin sheet having the same type as that of a resin molded body 17 is used, the base sheet 11 is easily fixed to the resin molded body 17. In particular, it is preferable to use a thermoplastic resin sheet excellent in moldability, mechanical strength, flexibility, and weather resistance.

A thickness of the base sheet 11 is preferably 3 to 4 times a diameter of the wire 12. If the thickness is thinner than 3 times the diameter of the wire 12, when the wire 12 is embedded in the base sheet 11, a shape of the wire 12 stands out on the surface opposite to the surface of the base sheet 11 in which the wire 12 is embedded, and the decorative layer stacked on the opposite surface may be cracked, or appearance may be deteriorated when the opposite surface becomes the appearance of the molded article. If the thickness is more than 4 times the diameter of the wire 12, it becomes difficult to mold the film heater 10 into a three-dimensional shape. For example, in a case of the wire 12 having a diameter of 0.2 mm, the thickness of the base sheet 11 is preferably 0.6 mm to 0.8 mm.

As the protective sheet 21, a thermoplastic resin sheet such as polyethylene terephthalate, polyethylene, or polypropylene is used. For example, when a thermoplastic resin sheet having the same type as that of the resin molded body 17 is used, the protective sheet 21 is easily fixed to the resin molded body 17. In particular, it is preferable to use a thermoplastic resin sheet excellent in moldability, mechanical strength, flexibility, and weather resistance.

A thickness of the protective sheet 21 is preferably 1 to 2 times the diameter of the wire 12. If the thickness is thinner than 1 time the diameter of the wire 12, the shape of the wire 12 stands out when the wire 12 fixed on the base sheet 11 is covered, and there is a possibility that the decorative layer stacked on the protective sheet 21 is cracked or the appearance deteriorates when the protective sheet 21 becomes the appearance of the molded article. If the thickness is more than 2 times the diameter of the wire 12, it becomes difficult to mold the film heater 10 into a three-dimensional shape. For example, in a case of the wire 12 having a diameter of 0.2 mm, the thickness of the protective sheet 21 is preferably 0.2 mm to 0.4 mm.

Various conductive metal materials can be selected for the wire 12 in accordance with the intended use and purpose of the molded article to be manufactured. Examples thereof include pure copper, or a material such as a copper alloy in which silver, lead, tin, aluminum, nickel, beryllium, zirconium, or the like, is used alone or in combination with copper. In particular, pure copper having a low resistance value or an alloy having excellent mechanical strength is preferable.

The diameter of the wire 12 is preferably 0.05 mm to 0.2 mm, more preferably 0.15 mm to 0.2 mm. When the diameter is smaller than 0.05 mm, the resistance value becomes high, so that performance as a heater deteriorates, and there is a risk of disconnection when molding into a three-dimensional shape. If the diameter is larger than 0.2 mm, it becomes difficult to mold the film heater 10 into a three-dimensional shape. A length of the wire 12 can correspond to a pattern form of the conductive pattern 13, or the like.

An amount of the wire 12 to be embedded in the base sheet 11 is 1/3 of the thickness of the base sheet 11, and about 2/5 to 4/5, and preferably 1/2 to 3/4 of the diameter of the wire 12.

For the resin molded body 17, a material having characteristics suitable for the intended use and purpose of the molded article to be manufactured is used. Examples thereof include polycarbonate, acrylonitrile butadiene styrene, and PC-ABS alloy.

In a case where the film heater 10 according to the first embodiment of the present invention is used for an emblem or a bumper of an automobile, it is suitable to use polycarbonate for the base sheet 11, polyethylene terephthalate for the protective sheet 21, a silver-containing copper alloy for the wire 12, polycarbonate for a part that needs to transmit light for the resin molded body 17, and PC-ABS for a part that needs strength.

Next, a second embodiment of the present invention will be described with reference to the drawings while focusing on differences from the above embodiment.

The film heater 10 which is a conductive sheet according to the second embodiment of the present invention is the same as the film heater 10 according to the first embodiment except that a magnitude relationship of the linear expansion between the base sheet 11 and the protective sheet 21 and a material of the protective sheet 21 are different.

Fig. 3(2) is a schematic cross-sectional view taken along the line II-II in a state where the film heater 10 according to the second embodiment of the present invention is bent downward in the bent region A with the base sheet 11 as an upper surface. The base sheet 11 is stretched by bending, and a length of an outer surface of the base sheet 11 after bending is longer than a length of an outer surface of the base sheet 11 before bending.

When the film heater 10 according to the second embodiment of the present invention is bent in the bent region A, a length of an outer surface of the protective sheet 21 to be the inner sheet is equal to a length of an inner surface of the base sheet 11 to be the outer sheet.

With this configuration, stress due to the difference in expansion is less likely to be applied to a contact surface between the protective sheet 21 and the base sheet 11, so that peeling of the wire 12 can be stably prevented.

When the linear expansion of the base sheet 11 according to the second embodiment of the present invention is set as A1, the linear expansion of the protective sheet 21 is set as A2, the thickness of the film heater 10 is set as d, the bent portion of the base sheet 11 when the film heater 10 is bent is regarded as an arc, the radius thereof is set as R (see Fig.

3(2)), the molding temperature when the film heater 10 is bent in the bent region is set as T1, and the room temperature at that time is set as T2, a relationship of the following formula (2) can be set.
(2)

[Math. 2]

$$A1 - A2 > \frac{d}{R \times (T1 - T2)}$$

With this setting, when the film heater 10 is bent, the film heater 10 is warped toward the protective sheet 21 having a small linear expansion due to the difference in expansion between the base sheet 11 and the protective sheet 21, so that it is possible to assist molding of the conductive sheet into a three-dimensional shape by utilizing the warpage.

As the protective sheet 21, an inorganic resin sheet such as a negative thermal expansion filler is used. In particular, it is preferable to use an inorganic resin sheet excellent in moldability, mechanical strength, flexibility, and weather resistance.

A thickness of the protective sheet 21 is preferably 1 to 2 times the diameter of the wire 12. If the thickness is thinner than 1 time the diameter of the wire 12, the shape of the wire 12 stands out when the wire 12 fixed on the base sheet 11 is covered, and there is a possibility that the decorative layer stacked on the protective sheet 21 is cracked or the appearance deteriorates when the protective sheet 21 becomes the appearance of the molded article. If the thickness is more than 2 times the diameter of the wire 12, it becomes difficult to mold the film heater 10 into a three-dimensional shape. For example, in a case of the wire 12 having a diameter of 0.2 mm, the thickness of the protective sheet 21 is preferably 0.2 mm to 0.4 mm.

Next, a step of manufacturing a film heater molded article 18 which is a resin molded article will be described.

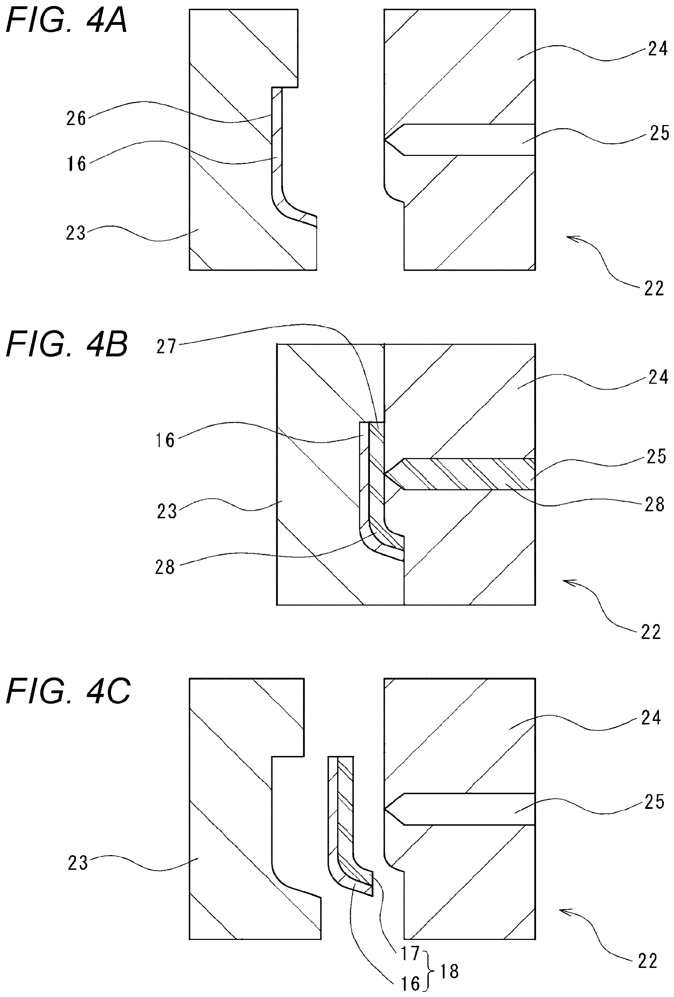

Referring to Fig. 4(1), an injection molding mold 22 includes a movable mold 23 and a fixed mold 24. In the present embodiment, as a result of the injection molding mold 22 including the movable mold 23 as a mold on the left side, and the fixed mold 24 as a mold on the right side, and the movable mold 23 moving in a horizontal direction (the left-right direction of the paper surface in Fig. 4(1)), the movable mold 23 approaches the fixed mold 24 or is separated from the fixed mold 24. The movable mold 23 includes a cavity surface 26 corresponding to the shape of a preform body 16 obtained by bending the film heater 10 in the bent region A, and the fixed mold 24 includes a resin flow path 25 for injecting a molten resin 28. The preform body 16 is disposed on the cavity surface 26 of the movable mold 23 in a state where the injection molding mold 22 is opened to the left and right.

Next, referring to Fig. 4(2), the fixed mold 24 and the movable mold 23 are clamped to form a cavity 27 between the fixed mold 24 and the movable mold 23. The molten resin 28 is injected into the cavity 27 from the resin flow path 25 of the fixed mold 24 to mold the resin molded body 17, and at the same time, the film heater molded article 18 is molded. The molded film heater molded article 18 is directly cooled and solidified in a clamped state.

Next, referring to Fig. 4(3), the injection molding mold 22 is opened, and the film heater molded article 18 is taken out. In this way, the film heater molded article 18 in which the preform body 16 and the resin molded body 17 are molded simultaneously with injection molding is manufactured.

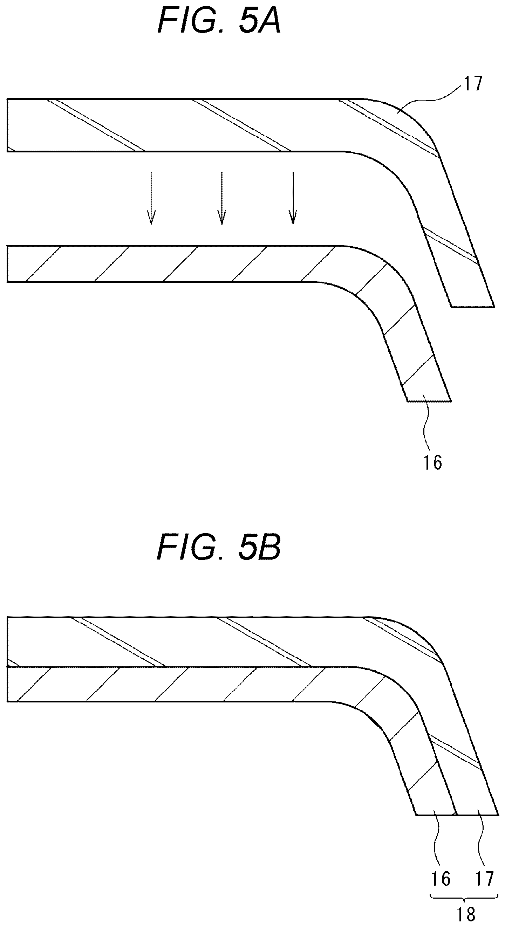

Referring to Fig. 5, the resin molded body 17 corresponding to the shape of the sheet surface on the outer side of the preform body 16 is stacked on the bent outer sheet surface of the preform body 16. In the stacking, an adhesive layer may be interposed and fixed between the preform body 16 and the resin molded body 17 as necessary. For the adhesive layer, for example, an adhesive such as an acryl-based adhesive, a urethane-based adhesive, an epoxy-based adhesive, a rubber-based adhesive, a polyester-based adhesive, a cellulose-based adhesive, or an emulsion is used. In this way, the film heater molded article 18 is manufactured.

As described above, in the film heater 10 configured as described above, the wire 12 is in close contact with the base sheet 11 when the film heater 10 is molded into a three-dimensional shape, so that it is possible to prevent peeling and disconnection of the wire 12 due to bending. With the method for manufacturing the film heater molded article 18 using the film heater 10 configured as described above, the film heater molded article 18 in which the wire 12 is not disconnected can be manufactured.

In the first embodiment and the second embodiment of the present invention, the wire 12 is directly embedded in the base sheet 11, but another layer may be formed on the base sheet 11 such as an adhesive layer, and the wire 12 may be fixed to the layer.

Further, in the first embodiment and the second embodiment of the present invention, the protective sheet 21 is directly fixed to the base sheet 11, but another layer may be formed on the base sheet 11 such as an adhesive layer, and the protective sheet 21 may be fixed to the layer.

Further, in the first embodiment and the second embodiment of the present invention, one conductive pattern 13 is provided by one wire 12 on the base sheet 11, but as long as the wire 12 is configured to cross the bent region, the number of wires, the number of patterns, and the shape are not limited to those in the above embodiments.

Further, in the first embodiment and the second embodiment of the present invention, the bent region is provided at the end portion of the film heater 10. However, as long as a part of the wire 12 crosses the bent region, the wire may be provided at another location on the base sheet 11.

Further, in the first embodiment and the second embodiment of the present invention, in another step of manufacturing the film heater molded article 18, the resin molded body 17 is stacked on the bent outer sheet surface of the preform body 16, but the resin molded body 17 can be stacked on the front surface, the back surface, or both surfaces of the preform body 16.

| | |
|---|---|
| 10 | Film heater |
| 11 | Base sheet |
| 12 | Wire |
| 13 | Conductive pattern |
| 14 | Heater portion |
| 15 | Connection terminal portion |
| 16 | Preform body |
| 17 | Resin molded body |
| 18 | Film heater molded article |
| 21 | Protective sheet |
| 22 | Injection molding mold |
| 23 | Movable mold |
| 24 | Fixed mold |
| 26 | Cavity surface |
| 27 | Cavity |
| 30, 40 | Outer surface |
| 31, 41 | Inner surface |
| A | Bent region |

**Claims**

1. A conductive sheet comprising:

   a base sheet having a bent region;
   a conductive pattern formed with a conductive wire fixed onto the base sheet; and
   a protective sheet formed on the base sheet so as to cover the conductive pattern,
   wherein a part of the wire crosses the bent region, and a linear expansion of either the base sheet or the protective sheet, which is to be the outer sheet, is set to be larger than a linear expansion of the other of the base sheet or the protective sheet, which is to be the inner sheet, when the conductive sheet is bent in the bent region.

2. The conductive sheet according to claim 1, wherein a length of an outer surface of the sheet to be the inner sheet is set to be equal to a length of an inner surface of the sheet to be the outer sheet when the conductive sheet according to claim 1 is bent in the bent region.

3. The conductive sheet according to claim 1, wherein when a linear expansion of the base sheet is set as A1, a linear expansion of the protective sheet is set as A2, a thickness of the conductive sheet according to claim 1 is set as d, a bent portion of the base sheet when the conductive sheet is bent in the bent region is regarded as an arc, a radius thereof is set as R, a molding temperature when the conductive sheet is bent in the bent region is set as T1, and a room temperature at that time is set as T2, a relationship of formula (1) or (2) below is set:

   (1) in a case where A1 < A2,

[Math. 1]

$$A2 - A1 > \frac{d}{R \times (T1 - T2)}$$

(2) in a case where A1 > A2,

[Math. 2]

$$A1 - A2 > \frac{d}{R \times (T1 - T2)}.$$

4. The conductive sheet according to claim 1, wherein the conductive pattern includes one continuous wire, and includes a heater portion and a connection terminal portion.

5. A resin molded article comprising:

a preform body obtained by bending the conductive sheet according to claim 1 in a bent region; and
a resin molded body stacked on a front surface, a back surface, or both surfaces of the preform body.

6. A method for manufacturing a resin molded article, the method comprising the steps of:

disposing the conductive sheet according to claim 1 on any cavity surface of an injection molding mold including a fixed mold and a movable mold that forms a cavity between the movable mold and the fixed mold by clamping;
clamping the injection molding mold;
injecting a molten resin into the cavity to mold a resin molded body and simultaneously fixing the conductive sheet to a surface of the resin molded body; and
opening the injection molding mold to take out the resin molded body.

7. The method for manufacturing the resin molded article according to claim 6, wherein the conductive sheet is a preform body obtained by bending the conductive sheet in the bent region.

8. A method for manufacturing a resin molded article, the method comprising the steps of:

preparing the preform body obtained by bending the conductive sheet according to claim 1 in the bent region; and
fixing a resin molded body having a surface shape corresponding to a shape of a front surface, a back surface, or both surfaces to the front surface, the back surface, or both surfaces of the preform body.

# FIG. 1

# FIG. 2

# FIG. 3A

# FIG. 3B

FIG. 4A

FIG. 4B

FIG. 4C

## FIG. 5A

## FIG. 5B

## INTERNATIONAL SEARCH REPORT

| International application No. |
|---|
| **PCT/JP2024/009317** |

### A. CLASSIFICATION OF SUBJECT MATTER

*H05B 3/20*(2006.01)i; *B29C 45/14*(2006.01)i; *H05B 3/10*(2006.01)i; *H05B 3/36*(2006.01)i
FI:  H05B3/20 345; B29C45/14; H05B3/36; H05B3/10 C

According to International Patent Classification (IPC) or to both national classification and IPC

### B. FIELDS SEARCHED

Minimum documentation searched (classification system followed by classification symbols)

H05B3/20; B29C45/14; H05B3/10; H05B3/36

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2017-4918 A (RYOYU KOGYO KK) 05 January 2017 (2017-01-05) | 1-8 |
| A | JP 2019-169417 A (TOPPAN INFOMEDIA CO., LTD.) 03 October 2019 (2019-10-03) | 1-8 |
| A | JP 11-74066 A (UBE IND., LTD.) 16 March 1999 (1999-03-16) | 1-8 |
| A | JP 2022-28547 A (NISSHA PRINTING CO., LTD.) 16 February 2022 (2022-02-16) | 1-8 |

☐ Further documents are listed in the continuation of Box C.          ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 May 2024** | **14 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/009317**

| Patent document cited in search report | | | Publication date (day/month/year) | Patent family member(s) | | | Publication date (day/month/year) |
|---|---|---|---|---|---|---|---|
| JP | 2017-4918 | A | 05 January 2017 | (Family: none) | | | |
| JP | 2019-169417 | A | 03 October 2019 | US | 2021/0037614 | A1 | |
| | | | | WO | 2019/188575 | A1 | |
| | | | | EP | 3780903 | A1 | |
| | | | | CN | 111919507 | A | |
| | | | | KR | 10-2020-0132951 | A | |
| JP | 11-74066 | A | 16 March 1999 | (Family: none) | | | |
| JP | 2022-28547 | A | 16 February 2022 | WO | 2022/030220 | A1 | |

Form PCT/ISA/210 (patent family annex) (July 2022)

**EP 4 679 936 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019169417 A